# EUROPÄISCHE PATENTSCHRIFT

(11) **EP 0 501 404 B1**
(45) Veröffentlichungstag und Bekanntmachung des Hinweises auf die Patenterteilung: **28.12.1994**
(21) Anmeldenummer: 92103148.0
(22) Anmeldetag: 25.02.1992
(51) Int. Cl.: F16L 3/22

(54) **Anschlussvorrichtung für Kunststoffrohre und Verfahren zum Anschliessen eines Kunststoffrohres**
Connection device for plastic pipes and method for connecting a plastic pipe
Dispositif de raccordement pour tuyaux en matière plastique et méthode pour raccorder un tuyau en matière plastique

(30) Priorität: 28.02.1991 DE 4106378
(43) Veröffentlichungstag der Anmeldung: 02.09.1992
(73) Patentinhaber: Hewing GmbH, D-48607 Ochtrup (DE)
(72) Erfinder: Homm, Karl Georg, W-4370 Marl (DE)
(74) Vertreter: Hilleringmann, Jochen, Dipl.-Ing.

(56) Entgegenhaltungen:
- EP-A- 0 067 264
- AU-B- 15 794
- DE-A- 3 836 124

## Beschreibung

Die Erfindung betrifft eine Verbindung zwischen einer Aschlußvorrichtung und einem Kunststoffrohr, insbesondere für Mehrschicht-Verbundrohre sowie vernetzte oder unvernetzte Kunststoffrohre mit und ohne Sauerstoff-Diffusionssperrschicht (z.B. EVOH-Schicht oder ähnliche Materialien), nach dem Oberbegriff des Anspruchs 1 und eine Aschlußvorrichtung für eine derartige Verbindung nach dem Oberbegriff des Anspruchs 18, wie aus EP-A-0 067 264 bekannt.

Zum Verbinden oder Anschließen von Kunststoffrohren mit bzw. an Anschlußkörpern sind bisher Anschlußvorrichtungen verwendet worden, wie sie aus der Anschluß- und Verbindungstechnik von Metallrohren her bekannt sind. Bei diesen bekannten Kunststoffrohr-Anschlußvorrichtungen weist der Anschlußkörper, bei dem es sich beispielsweise um einen Verbinder zum Verbinden zweier oder mehrerer Kunststoffrohre, um ein T- oder Winkelstück oder einen Verteiler (sogenannte Fittings) oder um ein fest montiertes anderes Teil handelt, an das das Kunststoffrohr anzuschließen ist, einen Anschlußstutzen auf, auf den der Endabschnitt des anzuschließenden Kunststoffrohres aufsteckbar ist. Hierzu ist es gegebenenfalls erforderlich, den Endabschnitt des Kunststoffrohres vor dem Aufstecken aufzuweiten. Es sind aber auch Anschlußvorrichtungen bekannt, bei denen der Außendurchmesser des Anschlußstutzens kleiner ist als der Innendurchmesser des Kunststoffrohres. Die Umfangsfläche der Anschlußstutzen ist in bestimmter Weise profiliert, insbesondere mit sägezahnförmigen Umfangsrippen versehen. Durch eine mit einem Innenkonus ausgestattete Überwurfmutter, die mit dem Anschlußkörper verschraubt wird, wird der auf dem Anschlußstutzen aufgesteckte Endabschnitt des Kunststoffrohres gegen den Anschlußstutzen gepreßt, wobei sich die Umfangsrippen mit dem Kunststoffrohr "verhaken". Andere Anschlußvorrichtungen weisen einen geschlitzten Ring mit Innenprofilierung auf, der beim Anziehen der Überwurfmutter gestaucht wird und auf diese Weise das Kunststoffrohr gegen die Umfangfläche des Anschlußstutzens drückt. Die bekannten Anschlußvorrichtungen für Kunststoffrohre sind insofern nachteilig, als durch die Profilierung von Anschlußstutzen und geschlitztem Ring eine Beschädigung des Kunststoffrohres erfolgt. Dies kann entweder zu Undichtigkeiten des Kunststoffrohres oder aber, bei Mehrschicht-Verbundkunststoffrohren, zu einer Beschädigung der Kunststoffbeschichtung führen, mit der Folge, daß der Metallrohrkern vor Korrosionen nicht mehr geschützt ist. Beim Anziehen der Überwurfmutter steigt der Anpreßdruck an, mit dem das Kunststoffrohr gegen den Anschlußstutzen oder der geschlitzte Ring gegen das Kunststoffrohr andrückt. Ab einem bestimmten Anpreßdruck dreht sich das Kunststoffrohr mit der Überwurfmutter mit, was zum einen zu einer Verdrillung des Kunststoffrohres führt und zum anderen ein "Einschneiden" der Profilierung ins Kunststoffrohr zur Folge hat. Darüberhinaus sorgt letztendlich lediglich die Profilierung im Bereich des freien Endes des Anschlußstutzens für den Halt des Kunststoffrohres am Anschlußkörper bei Zugbeanspruchungen. Diese Sicherung gegen ein Lösen des Kunststoffrohres von der Anschlußvorrichtung kann bei relativ großen Zugbeanspruchungen nicht ausreichend sein. Außerdem treten infolge der Profilierung des Anschlußstutzens oder des geschlitzten Rings bei dieser Art der "Verankerung" des Kunststoffrohres Scherkräfte auf, wenn das Kunststoffrohr Zugbeanspruchungen ausgesetzt wird.

Aus DE 38 36 124 A1 ist ein zweiteiliger Klemmverbinder bekannt, bei dem eine Preßhülse auf das anzuschließende Ende eines Rohres aufpreßbar ist, das zuvor unter Aufweitung auf einen Anschlußstutzen aufgeschoben ist. Die Verankerung des Rohres an dem Anschlußstutzen erfolgt durch umlaufende Umfangsvorsprünge des Anschlußstutzens, zwischen die das Material des Kunststoffrohres beim Aufpressen der Preßhülse gedrückt wird. Der vom freien Ende des Anschlußstutzens am weitesten beabstandete Umfangsvorsprung ist höher als die übrigen Vorsprünge, so daß die Verankerung des Kunststoffrohres insbesondere dort erfolgt. Da das aufgeschobene Kunststoffrohr lediglich im vergleichsweise geringen Maße über den höchsten Vorsprung bewegt wird, besteht hier die Gefahr von Beschädigung des Kunststoffrohres durch Scherung, wenn auf dieses axiale Zugbelastungen wirken.

Bei der Verbindung,bzw. der Anschlußvorrichtung nach EP-A-0 067 264 wird das anzuschließende Rohr auf einen Stutzen aufgeschoben, der im Innern eines Verbinders koaxial zu diesem angeordnet ist. Der Verbinder steht in beiden axialen Richtungen über den Stutzen über und ist in diesen beiden Abschnitten mit einem Innengewinde versehen. Zwischen dem Stutzen und dem Verbinder bildet sich eine Ringnut, in die das Rohrende eingetaucht ist. Der Durchmesser der Ringnut ist größer als der Außendurchmesser des Stutzens. Mit dem Verbinder werden zwei Außengewinde aufweisende Schraubhülsen verschraubt, die das Rohr gegen den Anschlußstutzen gedrückt halten und es somit sichern.

Der Erfindung liegt die Aufgabe zugrunde, eine Verbindung der eingangs genannten Art sowie eine Anschlußvorrichtung zu schaffen, bei der Beschädigungen des Kunststoffrohres bei axialen Belastungen vermieden werden.

Zur Lösung dieser Aufgabe werden mit der Erfindung eine Verbindung mit den Merkmalen des Anspruchs 1 und eine Anschlußvorrichtung mit den Merkmalen des Anspruchs 18 vorgeschlagen.

Ein Merkmal der Erfindung ist in der zylindrischen Preßhülse zu sehen, die mit dem auf den Anschlußstutzen aufgesteckten Endabschnitt des Kunststoffrohres eine Preßpassung bildet und ohne relativ zum Anschlußstutzen und zum Kunststoffrohr verdreht zu werden, axial auf den Kunststoffrohr-Endabschnitt aufschiebbar ist. Die vorzugsweise mit einer planen Innenfläche versehene Preßhülse verursacht hierbei keinerlei Beschädigungendesxunststoffrohr-Endabschnittes. Für die erfindungsgemäße Lehre weiterhin entscheidend ist der Umstand, daß der Aufschiebevorgang der Preßhülse auf den Kunststoffrohr-Endabschnitt zunächst eine axiale Vorbewegung des Kunststoffrohres bewirkt, infolge derer das vordere Ende des Kunststoffrohr-Endabschnittes bis in die Aufnahmenut hineingeschoben bzw. gedrückt wird. Der Durchmesser der ringförmigen, den Anschlußstutzen umgebenden und zum Ende des Kunststoffrohres hin offenen Aufnahmenut verringert sich mit zunehmender Tiefe der Aufnahmenut. Die Aufnahmenut verläuft also in einem spitzen Winkel, vorzugsweise bis zu 30°, insbesondere 10° bis 20°, zur Achse des Anschlußstutzens. Die Neigung der Aufnahmenut zur Achse des Anschlußstutzens hängt insbesondere von der Dicke des Kunststoff- bzw. Mehrschicht-Verbundrohres sowie von deren Materialien ab; je dicker das Rohr desto größer die Neigung. Beim Eintauchen des vorderen Endes des Kunststoffrohres wird dieses also eingeschnürt, wodurch eine Verankerung des Kunststoffrohres am Anschlußkörper geschaffen ist, die das Kunststoffrohr gegen Zugspannungen gesichert an dem Anschlußkörper hält. Bei auf das Kunststoffrohr wirkenden Zugbeanspruchungen drückt das eingeschnürte Ende des Kunststoffrohres mit seiner Innenfläche gegen die Innenumfangsfläche der Aufnahmenut und hält den Endabschnitt des Kunststoffrohres am Anschlußstutzen bzw. -körper fest. Vorteilhafterweise ist am Anschlußstutzen eine der Aufnahmenut vorgelagerte Umfangsnut bzw. Umfangskerbung vorgesehen, die bei Zugbeanspruchungen des Kunststoffrohres wie ein Widerhaken wirkt.

Vorzugsweise ist die Breite der Aufnahmenut derart gewählt, daß die Wandung des Kunststoffrohrendes ohne Spiel in die Aufnahmenut aufgenommen ist. Die Breite der Aufnahmenut ist also im wesentlichen gleich der Wandstärke des Kunststoffrohres oder aber das in die Aufnahmenut hineingeschobene Ende des Kunststoffrohres füllt die gesamt Aufnahmenut infolge einer Stauchung oder ähnlichen Verformung aus.

Der Aufschiebevorgang der Preßhülse auf den Kunststoffrohr-Endabschnitt läuft in zwei Phasen ab. In der ersten Phase des Aufschiebevorganges wird das Kunststoffrohr vorgeschoben, bis das stirnseitige Ende in die Aufnahmenut eingetaucht ist, im wesentlichen an dem Boden der Aufnahmenut anliegt und die Aufnahmenut ausfüllt. Bei diesem Verschiebevorgang braucht das Kunststoffrohrende in der Aufnahmenut nicht über (radiale) Vorsprünge o.dgl. geschoben zu werden; derartige Vorsprünge würden zu einer Scherung und damit Beschädigung der Innen- oder Außenfläche des von der Aufnahmenut aufgenommenen Endabschnitts des Kunststoffrohres führen. Dies ist insbesondere bei Mehrschicht-Verbundrohren von Nachteil, da die außen- oder innenliegenden Materialschichten aus Kunststoff beim Überstülpen des Rohrs über den Vorsprung beschädigt würden mit der Folge, daß der Rohrkern aus Metall freiliegt. Mit weiterem Aufschieben der Preßhülse beginnt die zweite Phase, in der der Endabschnitt des Kunststoffrohres fest auf den Anschlußstutzen aufgepreßt wird, ohne daß sich das Kunststoffrohr noch vorbewegt. Während dieser beiden Phasen und auch nach der Verpressung fungiert der Anschlußstutzen als Stützkörper, der das Ende des Kunststoffrohres an dessen Innenfläche abstützt. Sofern der Anschlußstutzen eine Außenprofilierung aufweist, ist damit sichergestellt, daß bei der eigentlichen Verpressung keine axialen Relativbewegungen zwischen Kunststoffrohr und Anschlußstutzen mehr auftreten, mit der Folge, daß das Kunststoffrohr durch die Profilierung nicht beschädigt wird sondern sich fugenschlüssig mit dem Anschlußstutzen verbindet. Die Verankerung bzw. Verkrallung des Kunststoffrohrs mit den Anschlußstutzen erfolgt am stirnseitigen Kunststoffrohrende. Diese Verkrallung am Rohrende fängt axiale Zugbelastungen ab, so daß bei einer Profilierung des Anschlußstutzens keine Scherkräfte infolge der Profilierung bei Zugbeanspruchungen des Rohres auftreten. Aufgrund der Art der Verankerung bzw. Verkrallung der erfindungsgemäßen Anschlußvorrichtung am vorderen Rohrende können auch Schädigungen des Kunststoffrohrs infolge von durch thermische Lastwechsel hervorgerufene Zugbeanspruchung vermieden werden. Wie bereits oben erwähnt, müssen Beschädigungen des Kunststoffmaterials des Rohres unbedingt verhindert werden, da andernfalls die Gefahr besteht, daß das Rohr undicht wird und - bei einem Mehrschicht-Verbundrohr mit Metall-(Aluminium-)Rohrkern - die Gefahr von Korrosion bei Beschädigung der Kunststoffbeschichtung besteht.

Die Breite der Aufnahmenut ist vorteilhafterweise im wesentlichen gleich oder lediglich geringfügig größer bzw. kleiner als die Wandstärke des Kunststoffrohres im Bereich des Endabschnittes. Das in die Aufnahmenut eingetauchte Ende des Kunststoffrohr-Endabschnittes kann sich beim Vorschieben der Preßhülse in der Aufnahmenut nicht aufwerfen, so daß axiale Bewegungen des Kunststoffrohr-Endabschnittes unterbunden sind, sobald das Kunststoffrohr bis zum Boden der Aufnahmenut in diese eingetaucht ist. Die Verpressung des Kunststoffrohr-Endabschnittes mit dem Anschlußstutzen erfolgt also durch radiales Einschnüren des Kunststoffrohr-Endabschnittes, ohne daß das Kunststoffrohr axial relativ zum Anschlußstutzen bewegt wird. Hierdurch wiederum ist sichergestellt, daß Beschädigungen der Innenfläche des Kunststoffrohres durch die Außenkontur des Anschlußstutzens weitestgehend vermieden werden.

Vorteilhafterweise ist der Anschlußstutzen einstückig an dem Anschlußkörper ausgebildet. Der Anschlußkörper weist hierbei einen Hauptteil auf, mit dem der Anschlußkörper einstückig verbunden ist. Hauptteil und Anschlußkörper bilden ein einziges Teil und sind durch Bearbeitung eines Rohlings o.dgl. entstanden.

Die erfindungsgemäße Vorrichtung kann sowohl als Schraub- als auch als Preß-Anschlußvorrichtung ausgebildet sein. Im Falle der Schraub-Anschlußvorrichtung ist eine Überwurfmutter vorgesehen, die die Preßhülse umgibt und mit dem Anschlußkörper verschraubbar ist. Das Außengewinde zum Aufschrauben der Überwurfmutter auf den Anschlußkörper ist dabei am Hauptteil des Anschlußkörpers ausgebildet. Beim Verschrauben der Überwurfmutter drückt diese gegen das dem Anschlußkörper abgewandte hintere stirnseitige Ende der Preßhülse und schiebt diese axial vor. Da Überwurfmutter und Preßhülse zwei getrennte Teile sind und die Andrückfläche zwischen beiden relativ klein ist, dreht sich die Preßhülse beim Anziehen der Überwurfmutter nicht mit dieser mit.

Ist die Erfindung mit einer Preß-Anschlußvorrichtung ausgeführt, wird die Preßhülse mittels eines manuell, hydraulisch oder auf sonstige Weise betriebenen Preß- oder Zangenwerkzeuges auf den auf dem Anschlußstutzen aufgesteckten Endabschnitt des Kunststoffrohres aufgepreßt. Zur Sicherung der Preßhülse gegen ein Abrutschen ist gemäß einer vorteilhaften Weiterbildung der erfindungsgemäßen Preß-Anschlußvorrichtung vorgesehen, daß die Preßhülse ein dem Anschlußkörper zugewandtes vorderes stirnseitiges Ende aufweist, welches wie das vordere Ende des Kunststoffrohr-Endabschnittes in die Aufnahmenut eintaucht. Infolge der Neigung der Aufnahmenut relativ zum Anschlußstutzen bzw. der Neigung der außenliegenden Innenfläche der Umfangsnut wird das vordere stirnseitige Ende der Preßhülse nach innen abgewinkelt, so daß die Preßhülse über das in der Aufnahmenut eingetauchte Ende des Kunststoffrohres mit dem Anschlußkörper verankert ist. Vorteilhafterweise ist das vordere stirnseitige Ende der Preßhülse dünnwandiger als der übrige Teil der Preßhülse, um die zum Abwinkeln des vorderen Endes der Preßhülse erforderlichen Kräfte zu verringern. Bei der Ausführung der erfindungsgemäßen Vorrichtung als Preß-Anschlußvorrichtung ist die Öffnung der Aufnahmenut vorteilhafterweise aufgeweitet, indem die außenliegende Innenfläche der Aufnahmenut im Öffnungsbereich derselben angeschrägt ist. In den hierdurch geschaffenen Freiraum der Aufnahmenut taucht das vordere Ende der Preßhülse unter Abwinkelung ein.

In vorteilhafter Weiterbildung der Erfindung ist vorgesehen, daß die einander zugewandten Enden von Preßhülse und Anschlußkörper jeweils einen Vorsprung aufweisen, an denen das Zangen- oder Preßwerkzeug zum Aufpressen der Preßhülse angreifen. Mit dem Zangen- oder Preßwerkzeug wird die Preßhülse also auf den auf dem Anschlußstutzen aufgesteckten Endabschnitt des Kunststoffrohres aufgezogen, da der Vorsprung sich am vorderen (und nicht am hinteren) stirnseitigen Ende der Preßhülse befindet. Infolge des Aufziehens der Preßhülse wird deren Verkantung beim Aufpreßvorgang weitestgehend verhindert, so daß ungleichmäßige Anpreßdrucke auf den Endabschnitt des Kunststoffrohres und Beschädigungen desselben verhindert werden.

Ein Vorteil der Erfindung ist darin zu sehen, daß beim Anziehen der Überwurfmutter oder beim Aufpressen der Preßhülse der Anpreßdruck der Preßhülse auf das Kunststoffrohr und den Anschlußstutzen unabhängig davon, inwieweit die Überwurfmutter mit dem Anschlußkörper verschraubt bzw. die Preßhülse aufgepreßt ist, konstant ist. Im Gegensatz dazu wird das Kunststoffrohr bei den bekannten Anschlußvorrichtungen aufgrund des Innenkonus der Überwurfmutter mit fortschreitender Verschraubung immer stärker gegen den Anschlußstutzen gepreßt. Sobald die Preßhülse der erfindinngsgemäßen Anschlußvorrichtung mit ihrem vorderen Ende am Anschlußkörper anliegt, ist der Anschlußvorgang abgeschlossen, d.h. das Kunststoffrohr sicher und dicht mit dem Anschlußkörper (über den Anschlußstutzen) verbunden. Bei der Ausführung der erfindungsgemäßen Vorrichtung als preß-Anschlußvorrichtung kann die Anlage der Preßhülse am Anschlußkörper bzw. an dessen sich an den Anschlußstutzen anschließenden Teil von außen leicht erkannt werden. Auch bei Ausgestaltung der erfindungsgemäßen Vorrichtung als Schraub-Anschlußvorrichtung ist eine Sichtkontrolle von außen möglich. An dem Anschlußkörper könnte eine Außenmarkierung angebracht werden, mit der die Vorderkante der Überwurfmutter fluchten muß, damit die von der Überwurfmutter umgebene Preßhülse im Bereich der Aufnahmenut am Anschlußkörper anstößt. Bei der Außenmarkierung kann es sich beispielsweise um einen Ringflansch mit Außensechskant handeln, wobei die Überwurfmutter so weit angezogen werden muß, bis deren vorderes Ende an dem Ringflansch anliegt. Der Abstand des vorderen Endes der Überwurfmutter zu derjenigen Fläche, die an dem hinteren stirnseitigen Ende der Preßhülse beim Aufschieben derselben anliegt, muß dabei gleich der Summe aus der Länge der Preßhülse und dem Abstand zwischen dem Ringflansch des Anschlußkörpers und der Öffnung der Aufnahmenut gewählt werden.

In vorteilhafter Weiterbildung der Erfindung ist vorgesehen, daß der Anschlußkörper einen den Anschlußstutzen umgebenden Kragen (oder Ring) aufweist und daß die Aufnahmenut von dem Ringspalt zwischen dem Kragen und dem Anschlußstutzen gebildet und durch diese begrenzt ist. Diese Lösung bringt fertigungstechnische Vorteile mit sich. Zwischen dem Anschlußstutzen und dem übrigen Teil des Anschlußkörpers (bei einer Schraub-Anschlußverbindung handelt es sich hierbei um den mit dem Außengewinde versehenen Teil des Anschlußkörpers) besteht ohnehin ein Versatz, da der Außendurchmesser des Anschlußstutzens kleiner ist als der Außendurchmesser des Anschlußkörpers. In die auf diese Weise entstehende Ringfläche wird nun die Aufnahmenut eingefräst, so daß ein den Anschlußstutzen umgebender Kragen entsteht.

Vorteilhafterweise ist die Preßhülse an ihrem der Aufnahmenut zugewandten stirnseitigen vorderen Ende mit einer angeschrägten konischen Innenfläche versehen, wobei sie an ihrem der Aufnahmenut abgewandten stirnseitigen hinteren Ende vorzugsweise einen Innenvorsprung geringer Höhe aufweist. Infolge der Anfasung am vorderen Ende ist die Hülse "entgratet", so daß Beschädigungen des Kunststoffmaterials beim Aufschieben bzw. -pressen der Preßhülse weiter ausgeschlossen werden. Das durch den Innenvorsprung geringfügig eingezogene hintere Ende der Preßhülse drückt sich gegen Ende des Aufschiebevorganges außen an das Kunststoffrohr an.

Vorteilhafterweise befindet sich in der Aufnahmenut ein Dichtungsring, bei dem es sich vorzugsweise um einen O-Ring handelt. Dieser Dichtungsring hat in erster Linie keine Dichtungsfunktion sondern soll vielmehr bei einem Mehrschicht-Verbundrohr die Stirnfläche des Metallrohrkernes vor Korrosion schützen. Die Dichtigkeit der Verbindung des Kunststoffrohres mit der Anschlußvorrichtung wird durch den hohen Anpreßdruck erzielt, mit dem die Preßhülse gegen die Außenfläche des Kunststoffrohres und über das Kunststoffrohr die Innenfläche des Kunststoffrohres gegen die Außenfläche des Anschlußstutzens drückt.

Nachfolgend werden anhand der Figuren Ausführungsbeispiele der Erfindung näher erläutert. Im einzelnen zeigen:
- Fig. 1: einen Längsschnitt durch eine Schraub-Anschlußvorrichtung (einschließlich Kunststoffrohr) bei teilweise aufgeschraubter Überwurfmutter vor dem Aufpressen der Preßhülse,
- Fig. 2: einen Längsschnitt durch die verschraubte Anschlußvorrichtung gemäß Fig. 1,
- Fig. 3: einen Längsschnitt durch eine Preß-Anschlußvorrichtung (einschließlich Kunststoffrohr) vor dem Aufpressen der Preßhülse,
- Fig. 4: die Anschlußvorrichtung gemäß Fig. 3 bei vollständig verpreßter Preßhülse und
- Fign. 5 und 6: Seitenansichten einer Zange zum Zusammenpressen von Preßhülse und Anschlußkörper der Anschlußvorrichtung nach den Fign. 3 und 4.

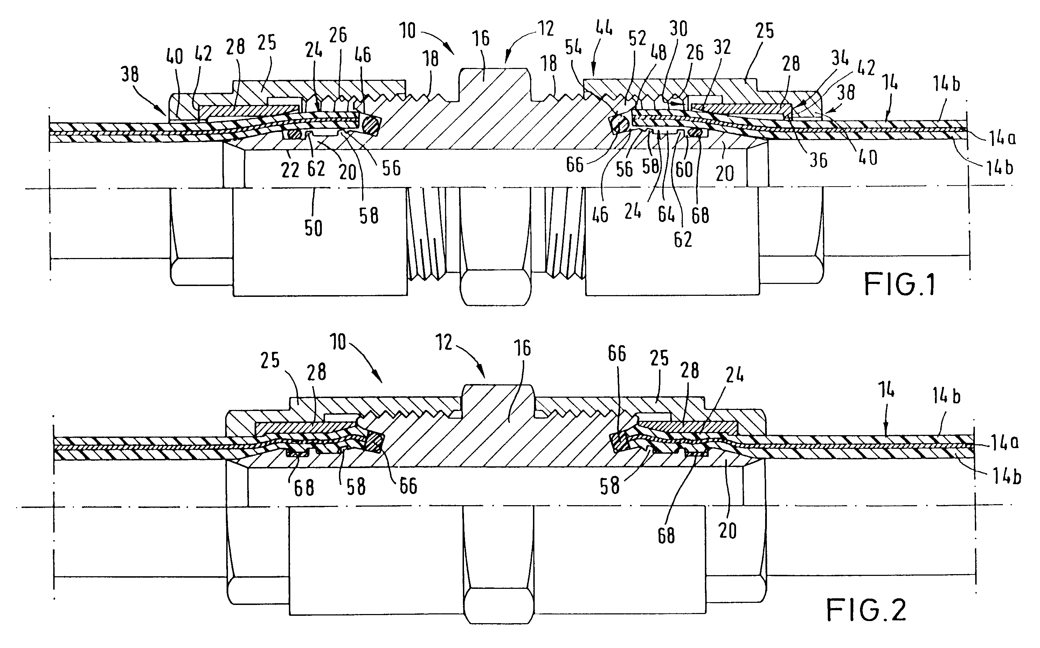

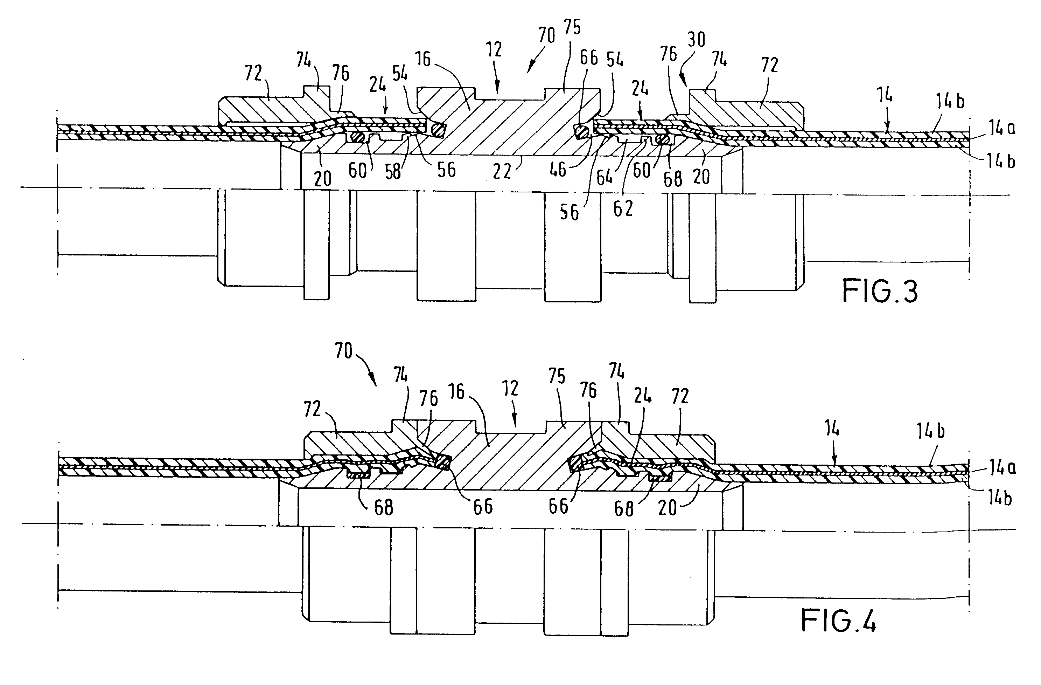

Die erfindungsgemäße Vorrichtung wird nachfolgend in der Ausführung als Schraub-Anschlußvorrichtung (Fign. 1 und 2) und in der Ausführung als Preß-Anschlußvorrichtung (Fign. 3 und 4) erläutert, und zwar anhand der Ausbildung der Anschlußkörper als Verbinder zum Verbinden zweier Kunststoffrohre.

Die Schraub-Anschlußvorrichtung 10 weist einen Anschlußkörper 12 in Form eines Verbinders zum Verbinden der Enden zweier Kunststoffrohre 14 auf. Bei den Kunststoffrohren 14 handelt es sich um Mehrschicht-Verbundrohre, die jeweils aus einem Aluminiumrohr 14a bestehen, auf deren Innen- und Außenflächen Kunststoffschichten 14b angeordnet sind. Der Anschlußkörper 12 weist ein im wesentlichen rohrförmiges Hauptteil 16 auf, das zu beiden Seiten mit Außengewinden 18 versehen ist. Im mittleren Bereich des Hauptteils 16 ist dessen Umfangsfläche als Außen-Sechskantumfangsfläche ausgebildet. Zu beiden Enden des Hauptteils 16 ist jeweils ein Anschlußstutzen bzw. Anschlußstützkörper 20 angeordnet, wobei der Hauptteil 16 einstückig mit den Anschlußstutzen 20 verbunden ist und der Hauptteil 16 sowie die Anschlußstutzen 20 den Anschlußkörper 12 bilden. Durch den Anschlußkörper 12 hindurch erstreckt sich die Durchgangsbohrung 22.

Der Außendurchmesser der Anschlußstutzen 20 ist größer als der Innendurchmesser der anzuschließenden Kunststoffrohre 14 (die Umfangskontur der Anschlußstutzen 20 wird später noch im einzelnen beschrieben). Je nach Elastizität des Kunststoffes wird das Kunststoffrohr 14 vor dem Aufstecken auf den Anschlußstutzen 20 aufgeweitet; dies wird insbesondere bei einem Mehrfach-Verbundrohr mit Metall-Rohrkern der Fall sein. Bevor der gegebenenfalls aufgeweitete Endabschnitt 24 des Kunststoffrohres 14 auf einen Anschlußstutzen 20 aufgesteckt wird, werden auf das Kunststoffrohr 14 eine Überwurfmutter 25 mit Innengewinde 26 sowie eine Preßhülse 28 aufgesteckt. Die Preßhülse 28 weist dabei einen Innendurchmesser auf, der geringer ist als die Summe aus dem Außendurchmesser des Anschlußstutzens 20 und der zweifachen Wandstärke des Kunststoffrohr-Endabschnittes 24. Das dem Hauptteil 16 des Anschlußkörpers 12 zugewandte stirnseitige vordere Ende der Preßhülse 28 weist eine schrägverlaufende Innenfläche 32 (Innenanfasung) auf, während das hintere Ende 34 der Preßhülse 28 einen Innenvorsprung 36 geringer Stärke aufweist. Die Überwurfmutter 25 umschließt die Preßhülse 28 und nimmt diese (in sich) auf. Das dem Anschlußkörper 12 abgewandte hintere Ende 38 der Überwurfmutter 25 weist einen Innenringvorsprung 40 auf, dessen dem Anschlußkörper 12 zugewandte Ringfläche 42 mit der stirnseitigen Ringfläche am hinteren Ende 34 der Hülse 28 fluchtet. Das Innengewinde 26 der Überwurfmutter 25 ist an deren vorderen Ende 44 angeordnet. Fig. 1 zeigt die Schraub-Anschlußvorrichtung 10 in dem Zustand, in dem die Endabschnitte 24 der beiden zu verbindenden Kunststoffrohre 14 auf die jeweiligen Anschlußstutzen 20 aufgesteckt und die Überwurfmuttern 25 soweit mit dem Verbinder-Anschlußkörper 12 verschraubt sind, daß die Ringflächen 42 an den hinteren Enden 34 der Preßhülse 28 und deren vorderen Enden 30 (genauer die Innenflächen 32) im Bereich der Endabschnitte 24 an den Außenflächen der Kunststoffrohre 14 anliegen.

In das Hauptteil 16 des Anschlußkörpers 12 ist pro Anschlußstutzen 20 eine Aufnahmenut 46 eingearbeitet, die den zugehörigen Anschlußstutzen 20 ringförmig umgibt und zum Ende des Anschlußstutzens 20, also zum Ende des anzuschließenden Kunststoffrohres 14 hin offen ist. Die Aufnahmenuten 46 sind in den radialen Ringflächen 48 ausgebildet, die infolge des Durchmesserunterschiedes zwischen dem Hauptteil 16 im Bereich von dessen Außengewinden 18 und den Anschlußstutzen 20 entstehen. Im Längsschnitt durch den Anschlußkörper 12 betrachtet, sind die Aufnahmenuten 46 gegenüber der Längsachse 50 des Anschlußkörpers 12 geneigt, wobei sie in einem Winkel von ca. 10° bis 20° zur Achse 50 zu den Anschlußstutzen 20 hin ansteigend verlaufen. Jede Aufnahmenut 46 wird also von einem Ringspalt zwischen Anschlußstutzen und einem ringförmigen Kragen 52 am Hauptteil 16 gebildet. Die Innenseitenfläche der Aufnahmenut 46 geht in die Umfangsfläche des Anschlußstutzens 20 über, während die Außenseitenfläche der Aufnahmenut 46 im Abstand zur Innenseitenfläche angeordnet ist und die Umfangsinnenfläche 54 des Kragens 52 darstellt. Diese Umfangsinnenfläche 54 ist im Bereich der Ringöffnung der Aufnahmenut 46 nach außen hin angeschrägt (angefast). Die Breite der Öffnung der Aufnahmenut 46 ist dabei derart gewählt, daß der Abstand zwischen zwei diametral gegenüberliegenden Punkten auf der Außenkante der Aufnahmenutöffnung gleich dem Außendurchmesser der Preßhülse 28 ist.

Jeder Anschlußstutzen 20 ist mit einer ersten Umfangsnut oder Umfangskerbung 56 versehen, die in der Umfangsfläche des Anschlußstutzens 20 eingearbeitet ist und - bei Betrachtung des Anschlußkörpers 12 vom freien Ende des jeweiligen Anschlußstutzens 20 aus betrachtet - der zugehörigen Aufnahmenut 46 unmittelbar vorgelagert ist. Während die Aufnahmenuten 46 im wesentlichen in axialer Richtung des Anschlußkörpers 12 ausgerichtet sind, sind die ersten Umfangsnuten 56 radial ausgerichtet. Die zur Aufnahmenut 46 nähere Innenseitenfläche der zugehörigen Umfangsnut 56 fluchtet mit der Vorderkante des Kragens 52, d.h. mit der Ringfläche 48. Auf der der Aufnahmenut 46 abgewandten Seite ist die zugehörige Umfangsnut 56 durch einen Umfangsvorsprung 58 begrenzt, dessen Umfangsfläche konisch verläuft und zur Aufnahmenut 46 hin ansteigt. Jeder Anschlußstutzen 20 ist darüberhinaus mit einer zweiten Umfangsnut 60 versehen, die einen Rechteckquerschnitt aufweist und weiter zum freien Ende des Anschlußstutzens 20 angeordnet ist. Auf der der ersten Umfangsnut 56 zugewandten Seite ist die zweite Umfangsnut 60 durch eine Umfangsrippe 62 begrenzt, wobei zwischen der Umfangsrippe 62 und dem Umfangsvorsprung 58 im Anschlußstutzen 20 eine Vertiefung 64 ausgebildet ist. In den Aufnahmenuten 46 und in den zweiten Umfangsnuten 60 sind jeweils Dichtungs-O-Ringe 66,68 angeordnet. Der Dichtungs-O-Ring 66 in der Aufnahmenut 46 hat dabei die Aufgabe, bei einem Mehrschicht-Verbundrohr den Metall-Rohrkern am stirnseitigen Ende abzudichten und gegen Korrosion zu schützen.

Nachfolgend soll ausgehend von dem in Fig. 1 wiedergegebenen Verschraubungszustand der Schraub-Anschlußvorrichtung 10 der Vorgang des Aufpressens der Preßhülse 28 auf den Kunststoffrohr-Endabschnitt 24 und das Verbinden des Kunststoffrohres 14 mit dem Anschlußkörper 12 beschrieben werden. Beim Verschrauben der Überwurfmutter 25 mit dem Anschlußkörper 12 schiebt die Überwurfmutter 25 die Preßhülse 28 auf den im Durchmesser aufgeweiteten Endabschnitt 24 des Kunststoffrohres 14. Zu Beginn des Aufschiebe- bzw. Aufpreßvorganges (zwischen der Preßhülse 28 und dem aufgeweiteten Kunststoffrohr-Endabschnitt 24 besteht eine Preßpassung) schiebt die Preßhülse 28 den aufgeweiteten Endabschnitt 24 und damit das Kunststoffrohr 14 in axialer Richtung über den Anschlußstutzen 20 auf das Hauptteil 16 des Anschlußkörpers 12 zu, bis das vordere stirnseitige Ende des Kunststoffrohr-Endabschnittes 24 in die Aufnahmenut 46 eingetaucht und an deren Boden bzw. dem Dichtungsring 66 anliegt. Ein weiteres Vorschieben des Kunststoffrohres 14 ist nun nicht mehr möglich, so daß sich nun beim weiteren Verschrauben der Überwurfmutter 25 die Preßhülse 28 über den Kunststoffrohr-Endabschnitt 24 schiebt und diesen allseitig gegen den Anschlußstutzen 20 preßt. Beim Aufpressen der Preßhülse 28 auf den Endabschnitt 24 verdreht sich die Preßhülse 28 nicht, sondern bewegt sich ausschließlich axial relativ zum Kunststoffrohr 14.

Die Anpreßkraft, mit der die Preßhülse 28 gegen den Endabschnitt 24 radial andrückt und diesen gegen die Umfangsfläche des zugehörigen Anschlußstutzens 20 preßt, ist zum einen durch das Material des Kunststoffrohres 14 und zum anderen durch die Wahl des Innendurchmessers der Preßhülse 28 in Relation zum Außendurchmesser des Anschlußstutzens 20 und der Wandstärke des Kunststoffrohres 14 bestimmt. Im zusammengeschraubten Zustand, d.h. dann, wenn die Überwurfmutter 25 mit ihrem vorderen Ende 44 seitlich am Außensechskant des Anschlußkörpers 12 anliegt, berührt das vordere Ende 30 der Preßhülse 28 die Außenumfangskante der Aufnahmenutöffnung 46 (Fig. 2). Das Material der Innenbeschichtung 14b des Rohres 14 wird während des Aufpressens in die am Anschlußstutzen 20 ausgebildeten Umfangsvertiefungen, d.h. teilweise in die zweite Umfangsnut 60, die Vertiefung 64 und in die erste Umfangsnut 56 hineingepreßt. Dabei verformt sich auch das Aluminiumrohr 14a der Außenkontur des Anschlußstutzens 20 entsprechend leicht. Da die Stauchung des Kunststoffrohr-Endabschnittes 24 erfolgt, ohne daß das Kunststoffrohr 14 vorbewegt wird (das stirnseitige Ende des Endabschnittes 24 ist vor dem eigentlichen Stauchungs- bzw. Preßvorganges in die Aufnahmenut 46 eingetaucht, so daß eine weitere axiale Vorbewegung des Kunststoffrohres 14 nicht mehr möglich ist), wird der Innenbereich des Kunststoffrohres 14 durch den Umfangsvorsprung 58 und die Umfangsrippe 62 nicht geschert und damit nicht beschädigt, weshalb eine fugenschlüsse Verbindung zwischen Kunststoffrohr 14 und Anschlußstutzen 20 entsteht.

Aufgrund der Schrägstellung der Aufnahmenut 46 zur Längsachse 50 von Anschlußkörper 12 und Anschlußstutzen 20 erfährt das in die Aufnahmenut 46 eingetauchte stirnseitige Ende des Kunststoffrohres 14 eine Einschnürung. Durch diese Einschnürung ist das Kunststoffrohr 14 mit dem Anschlußkörper 12 verankert und gegen zwischen dem Anschlußkörper 12 und dem Kunststoffrohr 14 wirkenden Zugspannungen gesichert. Diese Zugsicherung wird durch die Flächenpressung zwischen der Innenfläche des stirnseitigen Endes des Kunststoffrohres 14 und der Innenseitenfläche der Aufnahmenut 46 gewährleistet. Insbesondere ist das Kunststoffrohr 14 im Bereich der Umfangsrippe 62 und des Umfangsvorsprungs 58 bei durch thermische Lastwechsel oder mechanische Belastungen bedingten Zugbeanspruchungen entlastet, so daß keine Beschädigungen durch Scherkräfte auftreten.

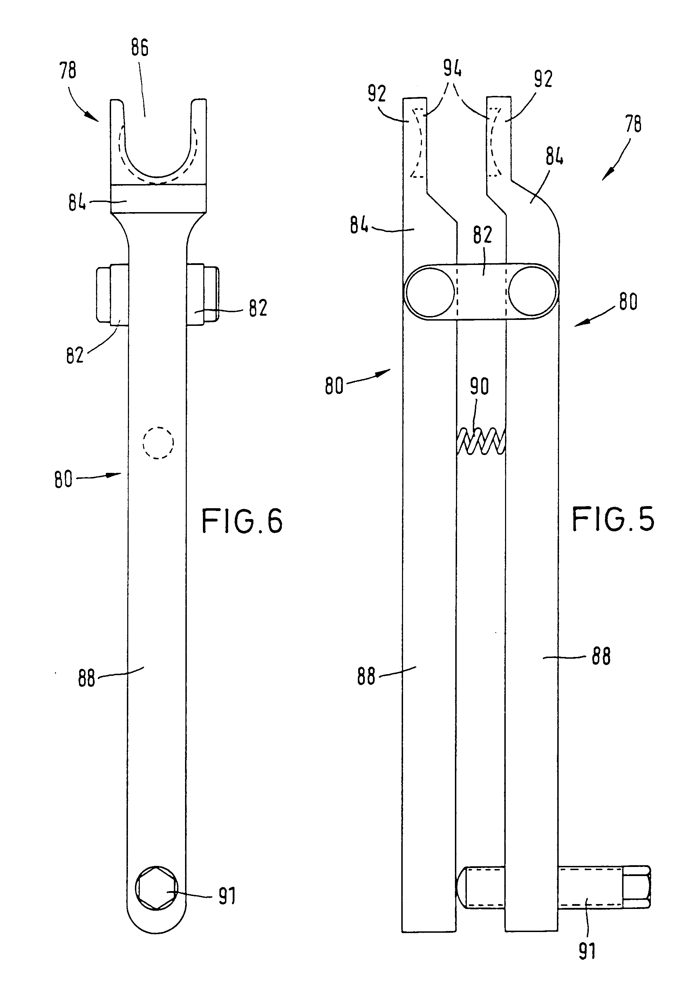

In den Fign. 3 und 4 ist eine Anschlußvorrichtung dargestellt, die als Preß-Anschlußvorrichtung 70 ausgebildet ist; diejenigen Teile der Preß-Anschlußvorrichtung, die den Teilen der Schraub-Anschlußvorrichtung 10 gemäß der Fign. 1 und 2 entsprechen, sind mit den gleichen Bezugszeichen gekennzeichnet. Wie im Fall der SchraubAnschlußvorrichtung 10 der Fign. 1 und 2 ist auch die Preß-Anschlußvorrichtung 70 der Fign. 3 und 4 am Beispiel eines Verbinder-Anschlußkörpers zum Verbinden zweier Kunststoffrohre dargestellt. Der wesentliche Unterschied zwischen der Schraub- und der Preß-Anschlußvorrichtung besteht darin, daß im letzteren Fall die Preßhülse 72 mittels eines geeigneten Werkzeuges, beispielsweise der in den Fign. 5 und 6 dargestellten Zange, auf den Kunststoffrohr-Endabschnitt 24 unter ausschließlich axialer Bewegung der Preßhülse 72 auf den Anschlußkörper 12 zu aufgepreßt wird. Zu diesem Zweck ist die Preßhülse 72 der Preß-Anschlußvorrichtung 70 länger und in der Wandstärke stärker ausgebildet als die Preßhülse 28 der Schraub-Anschlußvorrichtung 10. Für die Bemessung des Innendurchmessers der Preßhülse 72 gelten die oben im Zusammenhang mit der Preßhülse 28 gemachten Ausführungen. Sowohl die Preßhülse 72 als auch das Hauptteil 16 des Anschlußkörpers 12 ist mit einem im Querschnitt rechteckigen Umfangsvorsprung oder -flansch 74,76 versehen. Die beiden Umfangsflansche 74,76 sind an den einander zugewandten Enden von Anschlußkörper-Hauptteil 16 und Preßhülse 72 angeordnet. Die Umfangsflansche 74,76 stellen Einrichtungen zum Ansetzen eines Zangen- oder Preßwerkzeuges zwecks Aufpressen der Preßhülse dar. Dadurch, daß der Umfangsflansch 74 am - in Bewegungsrichtung betrachtet - vorderen Ende der Preßhülse 72 angeordnet ist, wird diese beim Preßvorgang auf den Kunststoffrohr-Endabschnitt 24 gezogen, so daß Verkantungen der Preßhülse 72 weitestgehend ausgeschlossen sind.

Während die Preßhülse 28 der Schraub-Anschlußvorrichtung 10 durch die mit dem Anschlußkörper 12 verschraubte Überwurfmutter 25 gegen ein Abziehen vom Kunststoffrohr-Endabschnitt 24 gesichert gehalten ist, muß eine derartige Sicherung bei der Preß-Anschlußvorrichtung 70 durch Modifikation der Preßhülse 72 geschaffen werden. Zu diesem Zweck weist die Preßhülse 72 an ihrem vorderen Ende 30 einen in axialer Richtung über den Umfangsvorsprung 74 überstehenden Ring 76 auf, dessen vorderes Ende eine Außenanschrägung aufweist. Dieser Ring 76 taucht in die Aufnahmenut 46 ein, wobei er bei Berührung mit der radialen Außenseitenfläche der Aufnahmenut 46 infolge von deren Schrägstellung nach innen abgewinkelt wird. Dieser Zustand, der sich bei vollständiger Verpressung der Preßhülse 72 ergibt, ist in Fig. 4 dargestellt. Der (Verankerungs-)Ring 76 ist unter Abwinkelung nach innen in die Aufnahmenut 46 eingetaucht, wo er sich mit dem stirnseitigen Ende des Kunststoffrohres 14 verhakt. Der eigentliche Aufpreßvorgang bei anfänglichem Vorschieben des Kunststoffrohres 14 in die Umfangsnut 46 hinein ist gleich dem im Zusammenhang mit der SchraubAnschlußvorrichtung 10 beschriebenen Vorgang. Ein Unterschied zwischen beiden Anschlußvorrichtungen ist noch darin zu sehen, daß die Anschrägung der Außenseitenfläche der Umfangsnut 46, d.h. der Umfangsinnenfläche 54 des Kragens 52, im Bereich von dessen Ringöffnung bei der Preß-Anschlußvorrichtung 70 stärker ist als bei der Schraub-Anschlußvorrichtung 10.

Anhand der Fign. 5 und 6 soll nachfolgend eine Zange 78 zum Verpressen der Preßhülse 72 mit dem Anschlußkörper 12 der Preß-Anschlußvorrichtung 70 erläutert werden. Die Zange 78 weist zwei im Abstand zueinander angeordnete Zangenarme 80 auf, die drehbar an zwei die Zangenarme 80 seitlich einschließenden Riegeln 82 gelagert sind. Die vorderen Enden 84 der Zangenarme 80 sind jeweils gabelförmig ausgebildet und weisen im wesentlichen U-förmige Aussparungen 86 auf. Die Zangenarme 80 sind mit den Riegeln 82 derart verbunden, daß die vorderen Enden 84 wesentlich kürzer als die hinteren Enden 88 sind. Vorzugsweise ist die Länge der hinteren Enden 88 drei- bis viermal so groß wie die vorderen Enden 84. Zwischen den hinteren Enden 88 der Zangenarme 80 erstreckt sich eine Feder 90; eines der hinteren Enden 88 ist mit einer querverlaufenden Gewindebohrung versehen, in die ein Bolzen 91 eingeschraubt ist, dessen vorderes Ende an dem hinteren Ende 88 des anderen Arms 80 der Zange 78 zum Aufeinanderzubewegen der vorderen Enden 84 anliegt.

Die Endabschnitte 92 der vorderen Enden 84 weisen auf ihren einander zugewandten Innenseiten entlang der Kanten der U-förmigen Aussparungen 86 Ausnehmungen 94 auf. In Seitenansicht betrachtet sind die Innenkanten der U-förmigen Aussparungen 86 kreisbogenförmig ausgebildet. Diese Ausbildung der vorderen Endabschnitte 92 ermöglicht es, daß die Zange 78 unabhängig von der Öffnungsstellung der vorderen Enden 84 stets eine Linienberührung mit den Umfangsvorsprüngen 74,75 an Preßhülse 72 und Anschlußkörper 12 hat. Damit wird ein Verkanten der Preßhülse 72 beim Aufpressen verhindert.

Die vorderen Enden 84 bzw. die vorderen Endabschnitte 92 der Zange 78 werden durch Verdrehen des eine Außensechskantfläche aufweisenden Bolzens 91 aufeinander zubewegt. Die an den einander abgewandten Ringflächen der Umfangsvorsprünge 74,75 an Preßhülse 72 und Anschlußkörper 12 anliegenden Randabschnitte der Aussparungen 86 drücken bzw. pressen dabei die Preßhülse 72 auf den Kunststoffrohr-Endabschnitt 24 auf. Die Aussparungen 86 an den gabelförmigen Endabschnitten 92 erlauben das Ansetzen der Zange 78 auch bei beengten Platzverhältnissen, wenn also der Freiraum um die Preß-Anschlußvorrichtung herum relativ stark eingeengt ist. Aufgrund des Übersetzungsverhältnisses von 3:1 bis 4:1 wird die Kraft, mit der die hinteren Zangenenden 88 beim Verdrehen des Bolzens 91 voneinander wegbewegt werden, in eine relativ große zwischen Preßhülse 72 und Anschlußkörper 12 wirkende Andrück- bzw. Anpreßkraft umgesetzt. Das Aufbringen der Kraft ist noch dadurch erleichtert, daß das Drehen des Bolzens 91 mit Hilfe eines Schraubenschlüssels oder einer Knarre erfolgt. Ferner ist es grundsätzlich auch möglich, die Zange 78 anstelle von Hand auch maschinell bzw. hydraulisch zu betätigen.

Wie anhand von Fig. 5 zu erkennen ist, sind die Endabschnitte 92 der vorderen Enden 84 der Zangenarme 80 gekröpft, und zwar derart stark, daß bei parallel zueinander verlaufenden Zangenarmen 80 die Verlängerung der Seitenfläche oder -linie desjenigen Zangenarms 80, gegen dessen hinteres Ende 88 der Bolzen 91 andrückt, in Höhe der Mitte des Abstandes zwischen den beiden einander zugewandten Seitenflächen der vorderen Endabschnitte 92 der Zange 78 verläuft.

## Patentansprüche

1. Verbindung zwischen einer Anschlußvorrichtung und einem Kunststoffrohr, mit
- einem Anschlußkörper (12), der mindestens einen Anschlußstutzen (20) aufweist, dessen Außendurchmesser größer ist als der Innendurchmesser des Kunststoffrohres (14) und auf den der Endabschnitt (24) des anzuschließenden Kunststoffrohres (14) aufsteckbar ist,
- wobei der Anschlußkörper (12) eine ringförmige, den Anschlußstutzen (20) umgebende, zum freien Ende des Anschlußstutzens (20) hin offene Aufnahmenut (46) zum Aufnehmen des Endes des Kunststoffrohres (14) aufweist,
**dadurch gekennzeichnet,**
- daß sich der Durchmesser der Aufnahmenut (46) mit zunehmender Tiefe der Aufnahmenut (46) verringert, und
- daß eine Preßhülse (28;72) vorgesehen ist, deren Innendurchmesser derart gewählt ist, daß die Preßhülse (28;72) auf den auf dem Anschlußstutzen (20) aufgesteckten Endabschnitt (24) des Kunststoffrohres (14) aufschiebbar ist, und zwar unter Vorschieben des Kunststoffrohres (14), bis dessen Ende in die Aufnahmenut (46) eingetaucht ist.

2. Verbindung nach Anspruch 1, dadurch gekennzeichnet, daß der Anschlußkörper (12) einen den Anschlußstutzen (20) umgebenden Kragen (52) aufweist, wobei die Aufnahmenut (46) von dem Ringspalt zwischen dem Kragen (52) und dem Anschlußstutzen (20) gebildet und durch diese begrenzt ist.

3. Verbindung nach Anspruch 1 oder 2, dadurch gekennzeichnet, daß die Preßhülse (28;72) an ihrem der Aufnahmenut (46) zugewandten stirnseitigen vorderen Ende (30) eine angeschrägte konische Innenfläche (32) aufweist.

4. Verbindung nach einem der Ansprüche 1 bis 3, dadurch gekennzeichnet, daß die Preßhülse (28;72) an ihrem der Aufnahmenut (46) abgewandten stirnseitigen hinteren Ende (34) einen Innenvorsprung (36) aufweist.

5. Verbindung nach einem der Ansprüche 1 bis 4, dadurch gekennzeichnet, daß die Aufnahmenut (46) in einem Winkel von bis zu 30° zur Achse (50) des Anschlußstutzens (20) verläuft.

6. Verbindung nach einem der Ansprüche 1 bis 5, dadurch gekennzeichnet, daß die Aufnahmenut (46) an ihrer Innenseite durch eine schrägliegende Umfangsaußenfläche des Anschlußstutzens (20) und an ihrer Außenseite durch eine zur Umfangsaußenfläche des Anschlußstutzens (20) parallele Umfangsinnenfläche (54) des Kragens (52) begrenzt ist.

7. Verbindung nach einem der Ansprüche 1 bis 6, dadurch gekennzeichnet, daß sich in der Aufnahmenut (46) ein Dichtungsring (66), vorzugsweise ein O-Ring, befindet.

8. Verbindung nach einem der Ansprüche 1 bis 7, dadurch gekennzeichnet, daß die Umfangsinnenfläche (54) des Kragens (52) zur Vergrößerung der Öffnung der Aufnahmenut (46) abgeschrägt ist.

9. Verbindung nach einem der Ansprüche 1 bis 8, dadurch gekennzeichnet, daß der Innendurchmesser der Preßhülse (28; 72) kleiner ist als die Summe aus dem Außendurchmesser des Anschlußstutzens (20) und der doppelten Wandstärke des auf dem Anschlußstutzen (20) aufgesteckten Endabschnitts (24) des Kunststoffrohres (14).

10. Verbindung nach einem der Ansprüche 1 bis 9, dadurch gekennzeichnet, daß der Anschlußstutzen (20) eine Umfangsnut (56) aufweist, die - bei Betrachtung des Anschlußkörpers (12) vom freien Ende des Anschlußstutzens (20) aus - der Aufnahmenut (46) vorgelagert ist.

11. Verbindung nach Anspruch 10, dadurch gekennzeichnet, daß die der Aufnahmenut (46) nähere Innenseitenfläche der Umfangsnut (56) mit der Vorderkante des Kragens (52) fluchtet.

12. Verbindung nach Anspruch 10 oder 11, dadurch gekennzeichnet, daß der Umfangsnut (56) auf deren der Aufnahmenut (46) abgewandten Seite ein Umfangsvorsprung (58) vorgelagert ist, der eine konisch verlaufende Umfangsfläche aufweist.

13. Verbindung nach einem der Ansprüche 1 bis 12, dadurch gekennzeichnet, daß eine mit dem Anschlußkörper (12) verschraubbare Überwurfmutter (25) vorgesehen ist und daß die Preßhülse (28) durch Verschrauben der Überwurfmutter (25) in axialer Richtung auf den auf dem Anschlußstutzen (20) aufgesteckten Endabschnitt des Kunststoffrohres (14) aufschiebbar ist.

14. Verbindung nach Anspruch 13, dadurch gekennzeichnet, daß die Überwurfmutter (25) zum Aufschieben der Preßhülse (28) gegen deren der Aufnahmenut (46) abgewandtes stirnseitiges hinteres Ende (34) drückt.

15. Verbindung nach einem der Ansprüche 1 bis 14, dadurch gekennzeichnet, daß bei aufgeschobener Preßhülse (72) deren der Aufnahmenut (46) zugewandtes vorderes Ende (30) unter Abwinklung nach innen hin in die Aufnahmenut (46) eingetaucht ist.

16. Verbindung nach einem der Ansprüche 1 bis 15, dadurch gekennzeichnet, daß die einander zugewandten Enden von Preßhülse (72) und Anschlußkörper (12) jeweils Einrichtungen zum Ansetzen eines Zangen- oder Preßwerkzeuges (78) zwecks Aufpressen der Preßhülse (72) auf den auf dem Anschlußstutzen (20) aufgesteckten Endabschnitt (24) des Kunststoffrohres (14) aufweisen.

17. Verbindung nach Anspruch 16, dadurch gekennzeichnet, daß die Einrichtungen als Umfangsvorsprünge (74,75) ausgebildet sind.

18. Anschlußvorrichtung für eine Verbindung nach einem der vorhergehenden Ansprüche mit
- einem Anschlußkörper (12), der mindestens einen Anschlußstutzen (20) aufweist, dessen Außendurchmesser größer ist als der Innendurchmesser des Kunststoffrohres (14) und auf den der Endabschnitt (24) des anzuschließenden Kunststoffrohres (14) aufsteckbar ist,
- wobei der Anschlußkörper (12) eine ringförmige, den Anschlußstutzen (20) umgebende, zum freien Ende des Anschlußstutzens (20) hin offene Aufnahmenut (46) zum Aufnehmen des Endes des Kunststoffrohres (14) aufweist,
**dadurch gekennzeichnet,**
- daß sich der Durchmesser der Aufnahmenut (46) mit zunehmender Tiefe der Aufnahmenut (46) verringert, und
- daß eine Preßhülse (28;72) vorgesehen ist, deren Innendurchmesser größer ist als der Außendurchmesser des Anschlußstutzens (20), und zwar über dessen gesamte axiale Länge, wobei sich zwischen der Preßhülse (28;72) und dem Anschlußstutzen (20) ein Ringraum bildet,
- wobei das Kunststoffrohr (14) auf den Anschlußstutzen (20) aufschiebbar und die Preßhülse (28; 72) auf den auf dem Anschlußstutzen (20) befindlichen Endabschnitt (24) des Kunststoffrohrs (14) aufschiebbar ist, und zwar unter Vorschieben des Kunststoffrohrs (14), bis dessen Ende in die Aufnahmenut (46) eingetaucht ist.

19. Vorrichtung nach Anspruch 18, dadurch gekennzeichnet, daß der Anschlußkörper (12) einen den Anschlußstutzen (20) umgebenden Kragen (52) aufweist, wobei die Aufnahmenut (46) von dem Ringspalt zwischen dem Kragen (52) und dem Anschlußstutzen (20) gebildet und durch diese begrenzt ist.

20. Vorrichtung nach Anspruch 18 oder 19, dadurch gekennzeichnet, daß die Preßhülse (28;72) an ihrem der Aufnahmenut (46) zugewandten stirnseitigen vorderen Ende (30) eine angeschrägte konische Innenfläche (32) aufweist.

21. Vorrichtung nach einem der Ansprüche 18 bis 20, dadurch gekennzeichnet, daß die Preßhülse (28; 72) an ihrem der Aufnahmenut (46) abgewandten stirnseitigen hinteren Ende (34) einen Innenvorsprung (36) aufweist.

22. Vorrichtung nach einem der Ansprüche 18 bis 21, dadurch gekennzeichnet, daß die Aufnahmenut (46) in einem Winkel von bis zu 30° zur Achse (50) des Anschlußstutzens (20) verläuft.

23. Vorrichtung nach einem der Ansprüche 18 bis 22, dadurch gekennzeichnet, daß die Aufnahmenut (46) an ihrer Innenseite durch eine schrägliegende Umfangsaußenfläche des Anschlußstutzens (20) und an ihrer Außenseite durch eine zur Umfangsaußenfläche des Anschlußstutzens (20) parallele Umfangsinnenfläche (54) des Kragens (52) begrenzt ist.

24. Vorrichtung nach einem der Ansprüche 18 bis 23, dadurch gekennzeichnet, daß sich in der Aufnahmenut (46) ein Dichtungsring (66), vorzugsweise ein O-Ring, befindet.

25. Vorrichtung nach einem der Ansprüche 18 bis 24, dadurch gekennzeichnet, daß die Umfangsinnenfläche (54) des Kragens (52) zur Vergrößerung der Öffnung der Aufnahmenut (46) abgeschrägt ist.

26. Vorrichtung nach einem der Ansprüche 18 bis 25, dadurch gekennzeichnet, daß der Anschlußstutzen (20) eine Umfangsnut (56) aufweist, die - bei Betrachtung des Anschlußkörpers (12) vom freien Ende des Anschlußstutzens (20) aus - der Aufnahmenut (46) vorgelagert ist.

27. Vorrichtung nach Anspruch 26, dadurch gekennzeichnet, daß die der Aufnahmenut (46) nähere Innenseitenfläche der Umfangsnut (56) mit der Vorderkante des Kragens (52) fluchtet.

28. Vorrichtung nach Anspruch 26 oder 27, dadurch gekennzeichnet, daß der Umfangsnut (56) auf deren der Aufnahmenut (46) abgewandten Seite ein Umfangsvorsprung (58) vorgelagert ist, der eine konisch verlaufende Umfangsfläche aufweist.

29. Vorrichtung nach einem der Ansprüche 18 bis 28, dadurch gekennzeichnet, daß eine mit dem Anschlußkörper (12) verschraubbare Überwurfmutter (25) vorgesehen ist und daß die Preßhülse (28) durch Verschrauben der Überwurfmutter (25) in axialer Richtung auf den auf dem Anschlußstutzen (20) aufgesteckten Endabschnitt des Kunststoffrohres (14) aufschiebbar ist.

30. Vorrichtung nach Anspruch 29, dadurch gekennzeichnet, daß die Überwurfmutter (25) zum Aufschieben der Preßhülse (28) gegen deren der Aufnahmenut (46) abgewandtes stirnseitiges hinteres Ende (34) drückt.

31. Vorrichtung nach einem der Ansprüche 18 bis 30, dadurch gekennzeichnet, daß bei aufgeschobener Preßhülse (72) deren der Aufnahmenut (46) zugewandtes vorderes Ende (30) unter Abwinklung nach innen hin in die Aufnahmenut (46) eingetaucht ist.

32. Vorrichtung nach einem der Ansprüche 18 bis 31, dadurch gekennzeichnet, daß die einander zugewandten Enden von Preßhülse (72) und Anschlußkörper (12) jeweils Einrichtungen zum Ansetzen eines Zangen- oder Preßwerkzeuges (78) zwecks Aufpressen der Preßhülse (72) auf den auf dem Anschlußstutzen (20) aufgesteckten Endabschnitt (24) des Kunststoffrohres (14) aufweisen.

33. Vorrichtung nach Anspruch 32, dadurch gekennzeichnet, daß die Einrichtungen als Umfangsvorsprünge (74,75) ausgebildet sind.

## Claims

1. A connection between a connector device and a plastic tube, comprising
- a connecting body (12) having at least one connecting piece (20) of which the outer diameter is larger than the inner diameter of the plastic tube (14) and which is adapted to have slid thereon the end portion (24) of the plastic tube (14) to be connected,
- the connecting body (12) having formed therein an annular receiving groove (46) surrounding the connecting piece (20) and being open towards the free end of the connecting piece (20), for receiving the end of the plastic tube (14),
**characterized in**
- that the diameter of the receiving groove (46) decreases with increasing depth of the receiving groove (46), and
- that a pressing sleeve (28;72) is provided, having its inner diameter selected such that the pressing sleeve (28;72) can be slid onto the end portion (24) of the plastic tube (14) arranged on the connecting piece (20), by advancing the plastic tube (14) until the end of the plastic tube (14) is received in the receiving groove (46).

2. The connection according to claim 1, characterized in that the connecting body (12) has a collar (52) surrounding the connecting piece (20), the receiving groove (46) being formed by the annular groove between said collar (52) and the connecting piece (20) and being limited by these parts.

3. The connection according to claim 1 or 2, characterized in that the frontal forward end (30) of the pressing sleeve (28;72) facing towards the receiving groove (46) has a beveled conical inner face (32).

4. The connection according to any one of claims 1 to 3, characterized in that the frontal rearward end (34) of the pressing sleeve (28;72) facing away from the receiving groove (46) has a an inner projection (36).

5. The connection according to any one of claims 1 to 4, characterized in that the receiving groove (46) extends at an angle of up to 30° relative to the axis (50) of the connecting piece (20).

6. The connection according to any one of claims 1 to 5, characterized in that the receiving groove (46) on its inner side is limited by an inclined outer peripheral face of the connecting piece (20) and on its outer side is limited by an inner peripheral face (54) of the collar (52) parallel to the outer peripheral face of the connecting piece (20).

7. The connection according to any one of claims 1 to 6, characterized in that the receiving groove (46) has a sealing ring (66), preferably an O-ring, arranged therein.

8. The connection according to any one of claims 1 to 7, characterized in that the inner peripheral face (54) of the collar (52) is beveled for enlarging the opening of the receiving groove (46).

9. The connection according to any one of claims 1 to 8, characterized in that the inner diameter of the pressing sleeve (28;72) is smaller than the sum of the outer diameter of the connecting piece (20) and twice the wall thickness of the end portion (24) of the plastic tube (14) slid onto the connecting piece (20).

10. The connection according to any one of claims 1 to 9, characterized in that the connecting piece (20) is provided with a peripheral groove (56) being arranged - when regarding the connecting body (12) from the free end of the connecting piece (20) - before the receiving groove (46).

11. The connection according to claim 10, characterized in that inner side face of the peripheral groove (56) which is closer to the receiving groove (46) is flush with the front edge of the collar (52).

12. The connection according to claim 10 or 11, characterized in that, before the peripheral groove (56), on the side thereof facing away from the receiving groove (46), there is arranged a peripheral projection (58) having a conical peripheral face.

13. The connection according to any one of claims 1 to 12, characterized in that there is provided a union nut (25) to be screwed to the connecting body (12) and that the pressing sleeve (28), by screwing the union nut (25) in axial direction, can be slid onto the end portion of the plastic tube (14) slid onto the connecting piece (20).

14. The connection according to claim 13, characterized in that the union nut (25), for shifting the pressing sleeve (28) in place, presses against the rear frontal end (34) of the pressing sleeve (28) facing away from the receiving groove (46).

15. The connection according to any one of claims 1 to 14, characterized in that, in the plugged condition of the pressing sleeve (72), the forward end (30) thereof facing towards the receiving groove (46) is received in the receiving groove (46) with the forward end being inwardly bent.

16. The connection according to any one of claim 1 to 15, characterized in that the confronting ends of the pressing sleeve (72) and the connecting body (12) are respectively provided with means for engaging a pliers-type or pressing tool (78) for pressing the pressing sleeve (72) onto the end portion (24) of the plastic tube (14) plugged on the connecting piece (20).

17. The connection according to claim 16, characterized in that said means are provided as peripheral projections (74,75).

18. A connector device for a connection according to any one of the preceding claims, comprising
- a connecting body (12) having at least one connecting piece (20) of which the outer diameter is larger than the inner diameter of the plastic tube (14) and which is adapted to have slid thereon the end portion (24) of the plastic tube (14) to be connected,
- the connecting body (12) having formed therein an annular receiving groove (46) surrounding the connecting piece (20) and being open towards the free end of the connecting piece (20), for receiving the end of the plastic tube (14),
**characterized in**
- that the diameter of the receiving groove (46) decreases with increasing depth of the receiving groove (46), and
- that a pressing sleeve (28;72) is provided, of which the inner diameter, over the entire axial length of the connecting piece (20), is larger than the outer diameter of the connecting piece (20), an annular chamber being formed between the pressing sleeve (28;72) and the connecting piece (20),
- wherein the plastic tube (14) can be slid onto the connecting piece (20) and the pressing sleeve (28;72) can be slid onto the end portion (24) of the plastic tube (14) arranged on the connecting piece (20), by advancing the plastic tube (14) until the end of the plastic tube (14) is received in the receiving groove (46).

19. The device according to claim 18, characterized in that the connecting body (12) has a collar (52) surrounding the connecting piece (20), the receiving groove (46) being formed by the annular groove between said collar (52) and the connecting piece (20) and being limited by these parts.

20. The device according to claim 18 or 19, characterized in that the frontal forward end (30) of the pressing sleeve (28;72) facing towards the receiving groove (46) has a beveled conical inner face (32).

21. The device according to any one of claims 18 to 20, characterized in that the frontal rearward end (34) of the pressing sleeve (28;72) facing away from the receiving groove (46) has a an inner projection (36).

22. The device according to any one of claims 18 to 21, characterized in that the receiving groove (46) extends at an angle of up to 30° relative to the axis (50) of the connecting piece (20).

23. The device according to any one of claims 18 to 22, characterized in that the receiving groove (46) on its inner side is limited by an inclined outer peripheral face of the connecting piece (20) and on its outer side is limited by an inner peripheral face (54) of the collar (52) parallel to the outer peripheral face of the connecting piece (20).

24. The device according to any one of claims 18 to 23, characterized in that the receiving groove (46) has a sealing ring (66), preferably an O-ring, arranged therein.

25. The device according to any one of claims 18 to 24, characterized in that the inner peripheral face (54) of the collar (52) is beveled for enlarging the opening of the receiving groove (46).

26. The device according to any one of claims 18 to 25, characterized in that the connecting piece (20) is provided with a peripheral groove (56) being arranged - when regarding the connecting body (12) from the free end of the connecting piece (20) - before the receiving groove (46).

27. The device according to claim 26, characterized in that inner side face of the peripheral groove (56) which is closer to the receiving groove (46) is flush with the front edge of the collar (52).

28. The device according to claim 26 or 27, characterized in that, before the peripheral groove (56), on the side thereof facing away from the receiving groove (46), there is arranged a peripheral projection (58) having a conical peripheral face.

29. The device according to any one of claims 18 to 28, characterized in that there is provided a union nut (25) to be screwed to the connecting body (12) and that the pressing sleeve (28), by screwing the union nut (25) in axial direction, can be slid onto the end portion of the plastic tube (14) slid onto the connecting piece (20).

30. The device according to claim 29, characterized in that the union nut (25), for shifting the pressing sleeve (28) in place, presses against the rear frontal end (34) of the pressing sleeve (28) facing away from the receiving groove (46).

31. The device according to any one of claims 18 to 30, characterized in that, in the plugged condition of the pressing sleeve (72), the forward end (30) thereof facing towards the receiving groove (46) is received in the receiving groove (46) with the forward end being inwardly bent.

32. The device according to any one of claim 18 to 31, characterized in that the confronting ends of the pressing sleeve (72) and the connecting body (12) are respectively provided with means for application of a pliers-type or pressing tool (78) for pressing the pressing sleeve (72) onto the end portion (24) of the plastic tube (14) plugged on the connecting piece (20).

33. The device according to claim 32, characterized in that said means are provided as peripheral projections (74,75).

## Revendications

1. Assemblage entre un dispositif de raccordement et un tuyau en matière plastique, avec
- un élément de raccordement (12) qui présente au moins une tubulure de raccordement (20) dont le diamètre extérieur est plus grand que le diamètre intérieur du tuyau en matière plastique (14) et sur lequel peut être enfilée la partie d'extrémité (24) du tuyau en matière plastique (14) à raccorder,
- l'élément de raccordement (12) présentant une rainure de réception (46) annulaire qui entoure la tubulure de raccordement (20), est ouverte vers l'extrémité libre de la tubulure de raccordement (20) et est destinée à recevoir l'extrémité du tuyau en matière plastique (14),
caractérisé par le fait
- que le diamètre de la rainure de réception (46) diminue au fur et à mesure qu'augmente la profondeur de la rainure de réception (46), et
- qu'il est prévu un manchon de pression (28 ; 72) dont le diamètre intérieur est choisi de telle manière que le manchon de pression (28 ; 72) peut être glissé sur la partie d'extrémité (24) du tuyau en matière plastique (14) enfilée sur la tubulure de raccordement (20) et ce en faisant avancer le tuyau en matière plastique (14), jusqu'à ce que son extrémité soit enfoncée dans la rainure de réception (46).

2. Assemblage selon la revendication 1, caractérisé par le fait que l'élément de raccordement (12) présente une collerette (52) entourant la tubulure de raccordement (20), la rainure de réception (46) étant formée par la fente annulaire entre la collerette (52) et la tubulure de raccordement (20) et délimitée par celle-ci.

3. Assemblage selon la revendication 1 ou 2, caractérisé par le fait que le manchon de pression (28 ; 72) présente, à son extrémité avant (30) du côté frontal orienté vers la rainure de réception (46), une surface intérieure conique biseautée (32).

4. Assemblage selon l'une des revendications 1 à 3, caractérisé par le fait que le manchon de pression (28 ; 72) présente, à son extrémité arrière (34) du côté frontal opposé à la rainure de réception (46), une saillie intérieure (36).

5. Assemblage selon l'une des revendications 1 à 4, caractérisé par le fait que la rainure de réception (46) s'étend suivant un angle allant jusqu'à 30° par rapport à l'axe (50) de la tubulure de raccordement (20).

6. Assemblage selon l'une des revendications 1 à 5, caractérisé par le fait que la rainure de réception (46) est délimitée, sur son côté intérieur, par une surface extérieure périphérique inclinée de la tubulure de raccordement (20) et, sur son côté extérieur, par une surface intérieure périphérique (54) de la collerette (52) parallèle à la surface extérieure périphérique de la tubulure de raccordement (20).

7. Assemblage selon l'une des revendications 1 à 6, caractérisé par le fait que dans la rainure de réception (46) se trouve une bague d'étanchéité (66), de préférence un joint torique.

8. Assemblage selon l'une des revendications 1 à 7, caractérisé par le fait que la surface intérieure périphérique (54) de la collerette (52) est biseautée afin d'agrandir l'ouverture de la rainure de réception (46).

9. Assemblage selon l'une des revendications 1 à 8, caractérisé par le fait que le diamètre intérieur du manchon de pression (28 ; 72) est plus petit que la somme du diamètre extérieur de la tubulure de raccordement (20) et du double de l'épaisseur de paroi de la partie d'extrémité (24) du tuyau en matière plastique (14) enfilée sur la tubulure de raccordement (20).

10. Assemblage selon l'une des revendications 1 à 9, caractérisé par le fait que la tubulure de raccordement (20) présente une gorge périphérique (56) qui, lorsqu'on observe l'élément de raccordement (12) à partir de l'extrémité libre de la tubulure de raccordement (20), est située avant la rainure de réception (46).

11. Assemblage selon la revendication 10, caractérisé par le fait que la surface intérieure de la gorge périphérique (56), qui est la plus proche de la rainure de réception (46), est au droit du bord avant de la collerette (52).

12. Assemblage selon la revendication 10 ou 11, caractérisé par le fait qu'avant la gorge périphérique (56) est située, sur son côté opposé à la rainure de réception (46), une saille périphérique (58) qui présente une surface périphérique s'étendant coniquement.

13. Assemblage selon l'une des revendications 1 à 12, caractérisé par le fait qu'il est prévu un écrou de capotage (25) pouvant être assemblé par vissage à l'élément de raccordement (12) et que le manchon de pression (28) peut être glissé axialement sur la partie d'extrémité du tuyau en matière plastique (14) enfilée sur la tubulure de raccordement (20) en vissant l'écrou de capotage (25).

14. Assemblage selon la revendication 13, caractérisé par le fait que, pour faire glisser le manchon de pression (28), l'écrou de capotage (25) pousse sur son extrémité arrière du côté frontal (34) opposé à la rainure de réception (46).

15. Assemblage selon l'une des revendications 1 à 14, caractérisé par le fait que, lorsque le manchon de pression (72) a été coulissé, son extrémité avant (30) orientée vers la rainure de réception (46) est engagée, par déformation vers l'intérieur, dans la rainure de réception (46).

16. Assemblage selon l'une des revendications 1 à 15, caractérisé par le fait que les extrémités du manchon de pression (72) et de l'élément de raccordement (12), qui sont orientées l'une vers l'autre, présentent, chacune, des arrangements permettant de faire agir un outil de pincement ou de pression (78) pour la mise en place par pression du manchon de pression (72) sur la partie d'extrémité (24) du tuyau en matière plastique enfilée sur la tubulure de raccordement (20).

17. Assemblage selon la revendication 16, caractérisé par le fait que les arrangements sont constitués de saillies périphériques (74, 75).

18. Dispositif de raccordement pour un assemblage selon l'une des revendications précédentes, avec
- un élément de raccordement (12) qui présente au moins une tubulure de raccordement (20) dont le diamètre extérieur est plus grand que le diamètre intérieur du tuyau en matière plastique (14) et sur lequel peut être enfilée la partie d'extrémité (24) du tuyau en matière plastique (14) à raccorder,
- l'élément de raccordement (12) présentant une rainure de réception (46) annulaire, qui entoure la tubulure de raccordement (20), est ouverte vers l'extrémité libre de la tubulure de raccordement (20) et est destinée à recevoir l'extrémité du tuyau en matière plastique (14),
caractérisé par le fait
- que le diamètre de la rainure de réception (46) diminue au fur et à mesure qu'augmente la profondeur de la rainure de réception (46), et
- qu'il est prévu un manchon de pression (28 ; 72), dont le diamètre intérieur est plus grand que le diamètre extérieur de la tubulure de raccordement (20), et ce sur toute sa longueur axiale, un espace annulaire étant constitué entre le manchon de pression (28 ; 72) et la tubulure de raccordement (20),
- le tuyau en matière plastique (14) pouvant être enfilé sur la tubulure de raccordement (20) et le manchon de pression (28 ; 72) pouvant être glissé sur la partie d'extrémité (24) du tuyau en matière plastique (14) situé sur la tubulure de raccordement (20), et ce en faisant avancer le tuyau en matière plastique (14) jusqu'à ce que son extrémité soit enfoncée dans la rainure de réception (46).

19. Dispositif selon la revendication 18, caractérisé par le fait que l'élément de raccordement (12) présente une collerette (52) entourant la tubulure de raccordement (20), la rainure de réception (46) étant formée par la fente annulaire entre la collerette (52) et la tubulure de raccordement (20) et délimitée par celle-ci.

20. Dispositif selon la revendication 18 ou 19, caractérisé par le fait que le manchon de pression (28 ; 72) présente, à son extrémité avant (30), du côté frontal orienté vers la rainure de réception (46), une surface intérieure conique biseautée (32).

21. Dispositif selon l'une des revendications 18 à 20, caractérisé par le fait que le manchon de pression (28 ; 72) présente, à son extrémité arrière (34) du côté frontal opposé à la rainure de réception (46), une saillie intérieure (36).

22. Dispositif selon l'une des revendications 18 à 21, caractérisé par le fait que la rainure de réception (46) s'étend suivant un angle allant jusqu'à 30° par rapport à l'axe (50) de la tubulure de raccordement (20).

23. Dispositif selon l'une des revendications 18 à 22, caractérisé par le fait que la rainure de réception (46) est délimitée, sur son côté intérieur, par une surface extérieure périphérique inclinée sur la tubulure de raccordement (20) et, sur son côté extérieur, par une surface intérieure périphérique (54) de la collerette (52) parallèle à la surface extérieure périphérique de la tubulure de raccordement (20).

24. Dispositif selon l'une des revendications 18 à 23, caractérisé par le fait que dans la rainure de réception (46) se trouve une bague d'étanchéité (66), de préférence un joint torique.

25. Dispositif selon l'une des revendications 18 à 24, caractérisé par le fait que la surface intérieure périphérique (54) de la collerette (52) est biseautée afin d'agrandir l'ouverture de la rainure de réception (46).

26. Dispositif selon l'une des revendications 18 à 25, caractérisé par le fait que la tubulure de raccordement (20) présente une gorge périphérique (56) qui, lorsqu'on observe l'élément de raccordement (12) à partir de l'extrémité livre de la tubulure de raccordement (20), est située avant la rainure de réception (46).

27. Dispositif selon la revendication 26, caractérisé par le fait que la surface intérieure de la gorge périphérique (56), qui est la plus proche de la rainure de réception (46), est au droit du bord avant de la collerette (52).

28. Dispositif selon la revendication 26 ou 27, caractérisé par le fait qu'avant la gorge périphérique (56) est située, sur son côté opposé à la rainure de réception (46), une saille périphérique (58) qui présente une surface périphérique s'étendant coniquement.

29. Dispositif selon l'une des revendications 18 à 28, caractérisé par le fait qu'il est prévu un écrou de capotage (25) pouvant être assemblé par vissage à l'élément de raccordement (12) et que le manchon de pression (28) peut être glissé axialement sur la partie d'extrémité du tuyau en matière plastique (14) enfilée sur la tubulure de raccordement (20) en vissant l'écrou de capotage (25).

30. Dispositif selon la revendication 29, caractérisé par le fait que, pour faire glisser le manchon de pression (28), l'écrou de capotage (25) pousse sur son extrémité arrière du côté frontal (34) opposé à la rainure de réception (46).

31. Dispositif selon l'une des revendications 18 à 30, caractérisé par le fait que, lorsque le manchon de pression (72) a été coulissé, son extrémité avant (30) orientée vers la rainure de réception (46) est engagée, par déformation vers l'intérieur, dans la rainure de réception (46).

32. Dispositif selon l'une des revendications 18 à 31, caractérisé par le fait que les extrémités du manchon de pression (72) et de l'élément de raccordement (12), qui sont orientées l'une vers l'autre, présentent, chacune, des arrangements permettant de faire agir un outil de pincement ou de pression (78) pour la mise en place par pression du manchon de pression (72) sur la partie d'extrémité (24) du tuyau en matière plastique enfilée sur la tubulure de raccordement (20).

33. Dispositif selon la revendication 32, caractérisé par le fait que les arrangements sont constitués de saillies périphériques (74, 75).
